# EUROPEAN PATENT APPLICATION

(11) **EP 4 848 406 A1**
(43) Date of publication of application: **02.12.2026**
(21) Application number: 26726050.3
(22) Date of filing: 27.01.2026
(51) Int. Cl.: H01M 10/42

(54) **BATTERY APPARATUS AND ELECTRIC APPARATUS**

(30) Priority: 13.02.2025 CN 202520229548 U
(71) Applicant: Contemporary Amperex Technology Co., Limited, Ningde, Fujian 352100 (CN)
(72) Inventor: GUO, Xinfei, Ningde Fujian 352100 (CN)
(74) Representative: Kraus & Lederer PartGmbB
(86) International application number: PCT/CN2026/075231
(87) International publication number: WO 2026/170999

(57) **Abstract**

The present application provides a battery device and an electric device. The battery device includes a frame, a heat exchange plate, a connection base, and a pipe joint. The frame defines, in an enclosing manner, an accommodating cavity. The heat exchange plate is arranged on a side of the accommodating cavity. The heat exchange plate is provided with a flow channel. The heat exchange plate extends to the outside of the accommodating cavity and is provided with an opening outside the accommodating cavity. The opening is in communication with the flow channel. The connection base covers the opening on the heat exchange plate and is connected to the heat exchange plate. The connection base is provided with a connection through hole. The connection through hole is in communication with the opening. The pipe joint is connected to the connection base and is in communication with the opening on the heat exchange plate through the connection through hole. As such, the heat exchange plate has a portion located outside the accommodating cavity, and the opening on the heat exchange plate is located outside the accommodating cavity, so that both the connection base and the opening are located outside the accommodating cavity. On the one hand, it can be convenient to detect whether leakage occurs, and on the other hand, if leakage occurs at the connection therebetween, it can be convenient to repair the leakage.

## Description

### CROSS-REFERENCE TO RELATED APPLICATIONS

The present application claims priority to Chinese Patent Application No. 2025202295487 filed on February 13, 2025, which is incorporated herein by reference in its entirety.

### TECHNICAL FIELD

The present application relates to the technical field of batteries, and in particular, to a battery device and an electric device.

### BACKGROUND

The battery device includes a case. The case is usually provided with a heat exchange plate. The heat exchange plate is configured to perform heat exchange with a battery cell inside the case. A pipe joint is further connected to the heat exchange plate, so that a heat exchange medium can enter and exit the heat exchange plate through the pipe joint. However, the design of a connection base between the heat exchange plate and the pipe joint is complex. If leakage occurs, it is inconvenient to detect and repair the leakage between the heat exchange plate and the connection base.

### SUMMARY

The present application provides a battery device and an electric device, which enable repair of leakage when the leakage occurs between a heat exchange plate and a connection base.

To solve the above technical problem, the present application provides a battery device. The battery device includes a frame, a heat exchange plate, a connection base, and a pipe joint. The frame defines, in an enclosing manner, an accommodating cavity. The heat exchange plate is arranged on a side of the accommodating cavity. The heat exchange plate is provided with a flow channel. The heat exchange plate extends to the outside of the accommodating cavity and is provided with an opening outside the accommodating cavity. The opening is in communication with the flow channel. The connection base covers the opening on the heat exchange plate and is connected to the heat exchange plate. The connection base is provided with a connection through hole. The connection through hole is in communication with the opening. The pipe joint is connected to the connection base and is in communication with the opening on the heat exchange plate through the connection through hole.

In the battery device of the above structure, the heat exchange plate extends to the outside of the accommodating cavity, and the opening on the heat exchange plate is located outside the accommodating cavity, so that both the connection base and the opening are located outside the accommodating cavity. On the one hand, it can be convenient to detect whether leakage occurs, and on the other hand, if leakage occurs at the connection therebetween, it can be convenient to repair the leakage outside the case.

In a possible embodiment, the connection base includes a first portion and a second portion. The first portion is connected to the second portion, the first portion is connected to the heat exchange plate, the second portion is provided with a connection through hole, and the first portion and the second portion are of an integrally formed structure.

As such, the connection base has good integrity and high fixing reliability for the pipe joint. Moreover, the pipe joint can be fixed to the case through only one component, the connection base, which simplifies the structure.

In a possible embodiment, the second portion is a flange.

As such, the pipe joint is in communication with the heat exchange plate through the flange. The flange provides a good sealing effect for connecting pipes, so that a problem of leakage of the heat exchange medium is less prone to occur.

In a possible embodiment, the pipe joint is connected to the flange by brazing.

The brazing results in small thermal deformation and good sealing performance.

In a possible embodiment, the heat exchange plate includes a first plate body and a second plate body. The second plate body is provided with a groove, and the groove forms a part of the flow channel. The second plate body includes a plate edge located outside the groove. The first plate body is connected to the plate edge of the second plate body. The first plate body covers a part of an opening of the groove. The first plate body includes a target side located at the groove. The frame is located on the target side of the first plate body. The target side and the plate edge define, in an enclosing manner, to form the opening. The second portion is connected to the target side of the first plate body, and the second portion is further connected to the plate edge of the second plate body.

As such, the heat exchange plate can be provided with the flow channel, and the heat exchange plate can be provided with the opening to be in communication with the pipe joint. The connection base is connected to the first plate body and the second plate body simultaneously, thereby improving the integrity. On the other hand, in the above structure, when leakage occurs between the first portion and the target side of the first plate body, the heat exchange medium can flow out from a gap between the first portion and the frame, thereby facilitating the monitoring of the leakage.

In a possible embodiment, the second plate body is manufactured by means of stamping.

The second plate body manufactured by means of stamping has good integrity and high strength.

In a possible embodiment, the first portion is a fixing plate. The fixing plate is attached to a frame wall of the frame, and the fixing plate and the flange are arranged at an included angle.

As such, the first portion of the connection base is in a plate form, so that leakage can be detected more easily. In addition, the fixing plate and the flange are in a curved form, so that the connection base has higher strength.

In a possible embodiment, a gap is formed between the fixing plate and the frame, and the gap is configured to enable a heat exchange medium to flow out when leakage occurs in the heat exchange medium.

When the leakage occurs, the heat exchange medium can flow out from the gap, thereby facilitating the monitoring of the leakage.

In a possible embodiment, the fixing plate is provided with a groove track, so that the gap is formed after the fixing plate is attached to the frame.

The groove track on the fixing plate enables the gap to be formed between the fixing plate and the frame.

In a possible embodiment, the first portion is perpendicular to the second portion.

This enables the connection base to be connected to the frame and the heat exchange plate simultaneously.

In a possible embodiment, the first plate body is a flat plate.

As such, the first plate body does not need to be manufactured by processes such as stamping, thereby reducing production costs.

In a possible embodiment, the first plate body is manufactured by means of cutting.

This provides the first plate body with good integrity.

In a possible embodiment, a connection portion is formed by bending the target side of the first plate body, and the connection portion is connected to the first portion of the connection base.

As such, a connection area between the connection base and the heat exchange plate can be increased.

In a possible embodiment, a stepped groove is formed on a side of the first portion, and the target side of the first plate body is connected to the stepped groove.

This can increase a connection area between the first portion and the first plate body.

In a possible embodiment, the connection base and the heat exchange plate are both made of a metal material.

The metal material can be welded.

In a possible embodiment, the connection base is connected to the heat exchange plate by brazing, and the first plate body is connected to the second plate body by brazing.

As such, the brazing involves a small heating area, can reduce the degree of deformation, is suitable for connection between plates of various shapes, and can reduce the sealing risk.

In a possible embodiment, the first portion and the second portion are both rectangular.

This can increase a connection area between the first portion and the second portion.

In a possible embodiment, the number of the connection through holes on the second portion is two, and the number of the pipe joints is two. The two pipe joints are a liquid inlet pipe joint and a liquid outlet pipe joint, respectively, and the liquid inlet pipe joint and the liquid outlet pipe joint are connected to the two connection through holes, respectively.

As such, the heat exchange medium can enter the flow channel of the heat exchange plate through the liquid inlet pipe joint, and exit the flow channel of the heat exchange plate through the liquid outlet pipe joint.

In a possible embodiment, the frame is connected to the heat exchange plate by friction stir welding.

As such, the friction stir welding provides a more reliable thermal connection.

To solve the above technical problem, the present application further provides an electric device, which includes a battery device. The electric device includes the above battery device, and the battery device is configured to provide electric energy.

In the above electric device, the heat exchange plate has a portion located outside the accommodating cavity, and the opening on the heat exchange plate is located outside the accommodating cavity, so that both the connection base and the opening are located outside the accommodating cavity. On the one hand, it can be convenient to detect whether leakage occurs, and on the other hand, if leakage occurs at the connection therebetween, it can be convenient to repair the leakage.

The above descriptions are merely an overview of the technical solutions of the present application. To understand the technical means of the present application more clearly, implementation can be performed according to the content of the specification. Moreover, to make the above and other objectives, features, and advantages of the present application more comprehensible, specific embodiments of the present application are particularly described below.

### BRIEF DESCRIPTION OF THE DRAWINGS

To describe the technical solutions of the embodiments of the present application more clearly, the following briefly introduces the accompanying drawings required for describing the embodiments. Apparently, the accompanying drawings in the following description show only some embodiments of the present application, and a person of ordinary skill in the art may still derive other drawings from these accompanying drawings without creative efforts.
FIG. 1 is a schematic structural diagram of a vehicle according to one or more embodiments;
FIG. 2 is a schematic structural diagram of a case in a battery device according to some embodiments;
FIG. 3 is a schematic structural diagram of a battery cell in a battery device according to some embodiments;
FIG. 4 is a top schematic structural diagram of the case in FIG. 2;
FIG. 5 is a schematic structural diagram of a first embodiment of a cross section taken along Aa in FIG. 4;
FIG. 6 is a schematic structural diagram of a second embodiment of a cross section taken along Aa in FIG. 4; and
FIG. 7 is a partial schematic structural diagram of the case in FIG. 2.

In the figures, 1000, vehicle; 200, controller; 300, motor; 100, battery device; 110, battery cell; 120, case; 121, frame; 122, heat exchange plate; 221, first plate body; 2211, target side; 2212, connection portion; 222, second plate body; 2221, plate edge; 223, flow channel; 224, opening; 123, accommodating cavity; 124, pipe joint; 125, connection base; 251, first portion; 511, stepped groove; and 252, second portion.

### DETAILED DESCRIPTION

Embodiments of the technical solutions of the present application are described in detail below. The following embodiments are used only to describe the technical solutions of the present application more explicitly, and therefore are interpreted only as examples, rather than as limitations on the protection scope of the present application.

Unless otherwise defined, all technical and scientific terms used herein have the same meaning as commonly understood by those skilled in the technical field to which the present application relates. The terminology used herein is for the purpose of describing particular embodiments only and is not intended to limit the present application. The terms "including" and "having" and any variations thereof in the description and claims of the present application and the foregoing description of the accompanying drawings are intended to cover non-exclusive inclusions.

In the description of the embodiments of the present application, the technical terms "first", "second", and the like are intended only to distinguish different objects, and should not be understood as indicating or implying relative importance or implying the number, specific order, or primary and secondary relationship of indicated technical features. In the description of the embodiments of the present application, the term "a plurality of" refers to more than two (including two). Similarly, "a plurality of groups" refers to more than two groups (including two groups), and "a plurality of pieces" refers to more than two pieces (including two pieces).

Embodiment mentioned in the specification means that particular features, structures, or characteristics described with reference to the embodiment may be included in at least one embodiment of the present application. The appearance of this phrase anywhere in the specification does not necessarily refer to the same embodiment, or a separate or alternative embodiment that is mutually exclusive with other embodiments. A person skilled in the art explicitly or implicitly understands that the embodiments described in the specification may be combined with other embodiments.

The term "and/or" in the description of the embodiments of the present application describes only an association relationship for describing associated objects and represents that three relationships may exist. For example, A and/or B may represent the following three cases: Only A exists, both A and B exist, and only B exists. In addition, the character "/" in the specification generally indicates an "or" relationship between the associated objects.

In the description of the embodiments of the present application, the orientations or positional relationships indicated by the technical terms such as "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", and "circumferential" are based on the orientations or positional relationships shown in the accompanying drawings, and are only for the convenience of describing the present application and simplifying the description, rather than indicating or implying that the involved device or element should have a specific orientation or should be configured or operated in the specific orientation, and therefore cannot be understood as limitations on the embodiments of the present application.

In the description of the embodiments of the present application, unless otherwise explicitly specified and defined, the technical terms "mounted", "connected", "connect", "fixed", and the like should be understood in a broad sense. For example, a connection may refer to a fixed connection, a detachable connection, or an integral connection; a mechanical connection or an electrical connection; a direct connection, an indirect connection via an intermediate medium, internal communication between two elements, or an interaction between two elements. For a person of ordinary skill in the art, the specific meanings of the above terms in the embodiments of the present application may be interpreted according to the specific situations.

At present, from the perspective of the development of the market situation, batteries are becoming increasingly widely used. Batteries are not only used in energy storage power systems such as hydraulic power, thermal power, wind power, and solar power stations, but also widely used in electric vehicles such as electric bicycles, electric motorcycles and electric vehicles, military equipment, aerospace, and other fields. With continuous expansion of application fields of the batteries, market demands for the batteries are also increasing.

A battery device includes a case. The case is usually provided with a heat exchange plate. The heat exchange plate is configured to perform heat exchange with a battery cell inside the case. A connection base is further fixed to the heat exchange plate, to enable connection to a pipe joint through the connection base, so that a heat exchange medium can circulate inside the heat exchange plate through the pipe joint. In the related art, a battery device is proposed. In the related art, if leakage occurs between a heat exchange plate and a connection base, the leakage between the heat exchange plate and the connection base cannot be repaired.

Based on the above consideration, to resolve the technical problem in the prior art that if leakage occurs, the leakage cannot be repaired, the present application provides a battery device and an electric device. A heat exchange plate of the battery device extends to the outside of an accommodating cavity and is provided with an opening at the outside of the accommodating cavity, so that both a connection base and the opening are located outside the accommodating cavity, and when leakage occurs in the connection therebetween, the leakage can be conveniently repaired.

For ease of description, the following embodiment is described by using an example in which an electric device according to an embodiment of the present application is a vehicle.

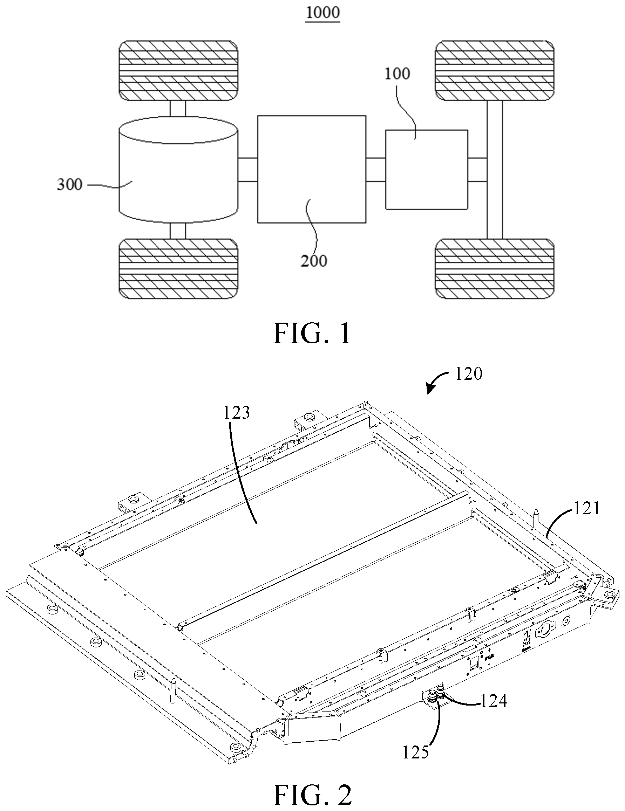

Referring to FIG. 1, FIG. 1 is a schematic structural diagram of a vehicle according to one or more embodiments.

A vehicle 1000 may be a fuel vehicle, a gas vehicle, or a new energy vehicle, and the new energy vehicle may be a pure electric vehicle, a hybrid vehicle, an extended-range electric vehicle, or the like. A battery device 100 is arranged inside the vehicle 1000. The battery device 100 may be arranged at a bottom or head or tail of the vehicle 1000. The battery device 100 may be configured to power the vehicle 1000. For example, the battery device 100 may be used as an operating power source of the vehicle 1000. The vehicle 1000 may further include a controller 200 and a motor 300. The controller 200 is configured to control the battery device 100 to power the motor 300, for example, to satisfy operating power requirements during starting, navigation, and traveling of the vehicle 1000.

In some embodiments of the present application, the battery device 100 may serve not only as an operating power source of the vehicle 1000, but also as a driving power source of the vehicle 1000, to provide driving power for the vehicle 1000 instead of or partially instead of fuel or natural gas.

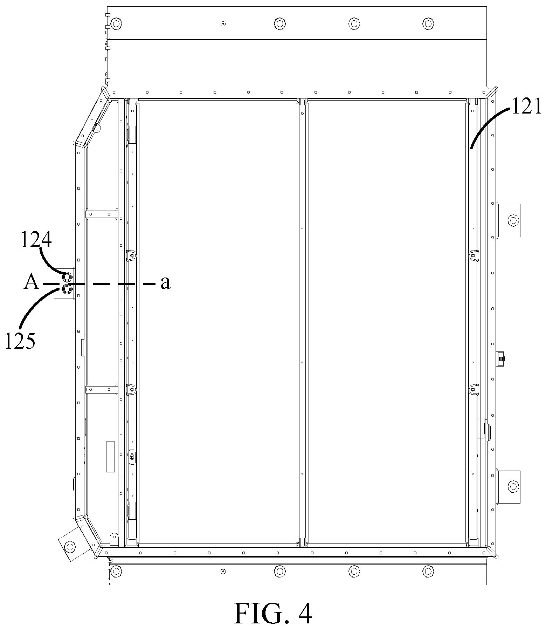

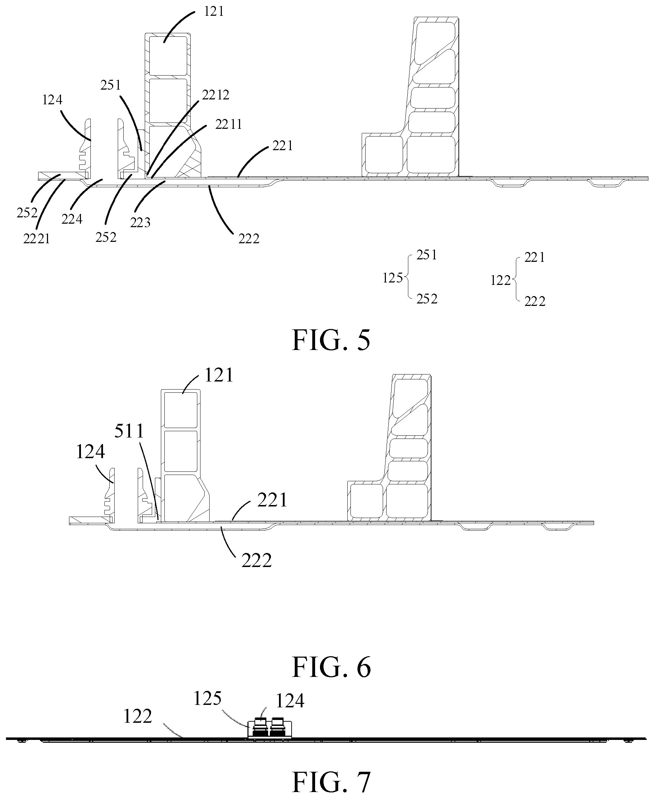

To improve the performance of the electric device, the present application provides a battery device. Referring to FIG. 2, FIG. 4, and FIG. 5, FIG. 2 is a schematic structural diagram of a case in a battery device according to some embodiments; FIG. 4 is a top schematic structural diagram of the case in FIG. 2; and FIG. 5 is a schematic structural diagram of a first embodiment of a cross section taken along Aa in FIG. 4.

In some embodiments, the battery device 100 includes a frame 121, a heat exchange plate 122, a connection base 125, and a pipe joint 124. The frame 121 defines, in an enclosing manner, an accommodating cavity 123. The heat exchange plate 122 is arranged on a side of the accommodating cavity 123. The heat exchange plate 122 is provided with a flow channel 223. The heat exchange plate 122 extends to the outside of the accommodating cavity 123 and is provided with an opening 224 outside the accommodating cavity 123. The opening 224 is in communication with the flow channel 223. The connection base 125 covers the opening 224 on the heat exchange plate 122 and is connected to the heat exchange plate 122. The connection base 125 is provided with a connection through hole (not shown), and the connection through hole is in communication with the opening 224. The pipe joint 124 is connected to the opening 224 on the heat exchange plate 122 through the connection through hole.

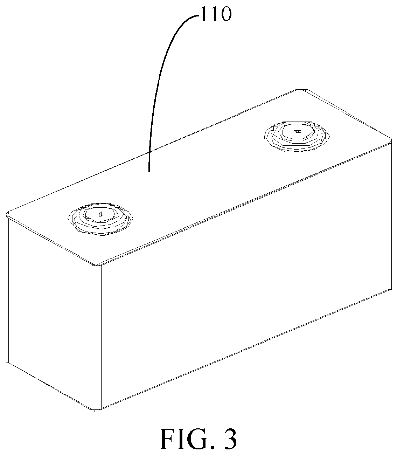

The battery device 100 further includes a battery cell 110. Referring to FIG. 3, FIG. 3 is a schematic structural diagram of a battery cell in a battery device according to some embodiments. The battery cell 110 is arranged in the accommodating cavity 123. The frame 121 is configured to protect the battery cell 110 and provide a sealed and electrically isolated environment for the battery cell 110. In this embodiment, the frame 121 is rectangular. In some other embodiments, the frame 121 may be circular, triangular, irregularly polygonal, or the like. The pipe joint 124 includes a liquid inlet pipe joint (not shown) and a liquid outlet pipe joint (not shown), and is configured to enable a heat exchange medium to flow into the heat exchange plate 122 or flow out of the heat exchange plate 122. In this embodiment, the frame 121 is arranged on a heat exchange plate 122. The frame 121 and the heat exchange plate 122 jointly define an accommodating cavity 123. The size of the heat exchange plate 122 is greater than the size of a bottom opening of the accommodating cavity 123. The heat exchange plate 122 extends to the outside of the accommodating cavity 123, so that the opening on the heat exchange plate 122 can be located outside the accommodating cavity 123. The connection base 125 is configured to communicate the pipe joint 124 with the opening of the heat exchange plate 122, and is configured to fix the pipe joint 124 to the heat exchange plate 122. In the related art, at least part of the opening on the heat exchange plate 122 is located in the accommodating cavity 123 or located in a projection region of the frame 121 on the heat exchange plate 122. If leakage occurs at the connection between the connection base 125 and the opening, the leakage region is located in the accommodating cavity or the leakage region is covered by the frame, and therefore the leakage cannot be repaired. In this embodiment, the heat exchange plate 122 extends to the outside the accommodating cavity 123, and both the connection base 125 and the opening are located outside the accommodating cavity. If leakage occurs at the connection therebetween, the leakage can be conveniently repaired from outside the accommodating cavity.

In the battery device 100 of the above structure, the heat exchange plate 122 has a portion located outside the accommodating cavity 123, and the opening of the heat exchange plate 122 is located outside the accommodating cavity 123, so that both the connection base 125 and the opening are located outside the accommodating cavity. On the one hand, it may be convenient to detect whether leakage occurs, and on the other hand, if leakage occurs at the connection therebetween, it may be convenient to repair the leakage.

In some embodiments, the connection base 125 includes a first portion 251 and a second portion 252. The first portion 251 is connected to the second portion 252, the first portion 251 is connected to the heat exchange plate 122, the second portion 252 is provided with a connection through hole, and the first portion 251 and the second portion 252 are of an integrally formed structure.

In this embodiment, the first portion 251 and the second portion 252 are of an integrally formed structure, and the integrally formed connection base 125 has better integrity. In some other embodiments, the first portion 251 and the second portion 252 may be connected by welding, or by other means such as bolting or screwing. The first portion 251 is connected to the heat exchange plate 122. The first portion 251 is configured to fix the second portion 252 to the heat exchange plate 122 together, so as to improve the fixing strength of the second portion 252 and make the pipe joint 124 more secure after being fixed. The connection through hole on the second portion 252 is of a through hole structure. One end of the connection through hole is in communication with the opening 224 on the heat exchange plate 122, and the other end of the connection through hole is in communication with the pipe joint 124.

In the above structure, the pipe joint 124 can be fixed to the case 120 through only one component, the connection base 125, which simplifies the structure.

In some embodiments, the second portion 252 is a flange.

The pipe joint 124 is connected through the flange, which provides a good sealing effect, high connection strength, and good stability. In this embodiment, after the pipe joint 124 is aligned with the connection through hole on the flange, the pipe joint 124 is welded to the flange. The flange provides a better sealing effect, so that a problem of leakage of the heat exchange medium is less prone to occur. In addition, in this embodiment, the manner of welding the pipe joint 124 to the flange is brazing. In some other embodiments, the manner of welding the pipe joint 124 to the flange may be friction stir welding, arc welding, or the like. In some other embodiments, a threaded hole may be formed on the flange, and a fixing hole may be formed on the pipe joint 124. After the pipe joint 124 is aligned with the connection through hole on the flange, the pipe joint 124 and the flange are fixed together by bolting. In addition, in this embodiment, the flange is of a rectangular disk-shaped structure. The rectangular flange enables a larger connection area between the flange and the first portion 251, so that the connection strength between the first portion 251 and the second portion 252 of the connection base 125 is higher. In some other embodiments, the flange may be circular, trapezoidal, irregularly polygonal, or the like.

As such, the pipe joint 124 is in communication with the heat exchange plate 122 through the flange. The flange provides a good sealing effect for connecting pipes, so that a problem of leakage of the heat exchange medium is less prone to occur.

Referring to FIG. 7, FIG. 7 is a partial schematic structural diagram of the case in FIG. 2. In some embodiments, the heat exchange plate 122 includes a first plate body 221 and a second plate body 222. The second plate body 222 is provided with a groove (not shown), and the groove forms a part of the flow channel 223. The second plate body 222 includes a plate edge 2221 located outside the groove. The first plate body 221 is connected to the plate edge 2221 of the second plate body 222, and the first plate body 221 covers a part of an opening of the groove. The first plate body 221 includes a target side 2211 located at the groove. The frame 121 is located on the target side 2211 of the first plate body 221. The target side 2211 and the plate edge 2221 define, in an enclosing manner, to form the opening 224. The second portion 252 is connected to the target side 2211 of the first plate body 221, and the second portion 252 is further connected to the plate edge 2221 of the second plate body 222.

The second plate body 222 is a curved plate. In this embodiment, the second plate body 222 is manufactured by means of stamping. In some other embodiments, the second plate body 222 may be manufactured by means of injection molding, welding, or the like. After the first plate body 221 is connected to the second plate body 222, a flow channel 223 is formed between the first plate body 221 and the groove of the second plate body 222, and the heat exchange medium can flow in the flow channel 223. The plate edge 2221 of the second plate body 222 is configured to be connected to the first plate body 221 and the second portion 252 of the connection base 125. The first plate body 221 covers a part of the opening of the groove, that is, the first plate body 221 does not cover the entire groove. After the first plate body 221 covers the part of the opening of the groove, the target side 2211 of the first plate body 221 is located at an upper portion of the opening of the groove, and the opening 224 is formed between the target side 2211 of the first plate body 221 located at the upper portion of the groove and the plate edge 2221 of the second plate body 222. In this embodiment, the frame 121 is further located on the target side 2211 of the first plate body 221 located at the upper portion of the groove, so that the first portion 251 of the connection base 125 can further abut against a frame wall of the frame 121.

As such, the heat exchange plate 122 can be provided with the flow channel 223, and the heat exchange plate 122 can be provided with the opening 224 to be in communication with the pipe joint 124. The connection base 125 is connected to the first plate body 221 and the second plate body 222 simultaneously, thereby improving the integrity. On the other hand, in the above structure, when leakage occurs between the first portion 251 and the target side 2211 of the first plate body 221, the heat exchange medium can flow out from a gap between the first portion 251 and the frame 121, thereby facilitating the monitoring of the leakage.

In some embodiments, the first portion 251 is a fixing plate. The fixing plate is attached to the frame wall of the frame 121, and the fixing plate and the flange are arranged at an included angle.

In this embodiment, the fixing plate is rectangular. The rectangular fixing plate enables a larger connection area between the fixing plate and the flange, which is also rectangular, so that the connection strength between the first portion 251 and the second portion 252 of the connection base 125 is higher. In this embodiment, the first portion 251 is perpendicular to the second portion 252. In some other embodiments, the included angle between the first portion 251 and the second portion 252 may be a suitable angle such as 85 degrees, 80 degrees, 95 degrees, or 100 degrees. In another aspect, the fixing plate abuts against the frame wall of the frame 121, and the fixing plate and the frame 121 are not fitted together. When leakage occurs between the fixing plate and the target side 2211 of the first plate body 221, it is more convenient for the leaked heat exchange medium to flow out from the gap between the first portion 251 and the frame 121. In some embodiments, a groove track (not shown) is formed on the fixing plate, so that after the fixing plate abuts against the frame wall of the frame 121, a gap for the heat exchange medium to flow out can be formed between the fixing plate and the frame 121.

As such, the first portion 251 is a fixing plate. In addition, the fixing plate and the flange are in a curved form, so that the connection base 125 has higher strength. In addition, the first portion 251 is in a flat plate form. When leakage occurs between the first portion 251 and the target side 2211 of the first plate body 221, it is convenient for the heat exchange medium to flow out from the gap between the first portion 251 and the frame 121. In addition, the fixing plate and the flange are in a curved form, so that the connection base 125 has higher strength.

In some embodiments, the first plate body 221 is in a flat plate form, and the target side 2211 of the first plate body 221 is further connected to the first portion 251.

Referring to FIG. 6, FIG. 6 is a schematic structural diagram of a second embodiment of a cross section taken along Aa in FIG. 4. In this embodiment, the first plate body 221 is in a flat plate form. The first plate body 221 may be directly cut to obtain the first plate body 221 in a specified shape, without processes such as stamping and welding, thereby reducing production costs. Further, in this embodiment, a stepped groove 511 is further formed by recessing a side of the first portion 251 of the connection base 125 that is connected to the target side 2211 of the first plate body 221. The target side 2211 of the first plate body 221 is connected to the stepped groove 511 of the first portion 251, so as to increase a connection area between the first portion 251 and the target side 2211 of the first plate body 221. In some other embodiments, referring to FIG. 5, FIG. 5 is a schematic structural diagram of a first embodiment of a cross section taken along Aa in FIG. 4. The first plate body 221 may alternatively be a curved plate. A connection portion 2212 is formed by bending the target side 2211 of the first plate body 221, and the connection portion 2212 is connected to the first portion 251. A bending angle at an end of the first plate body 221 is 90 degrees, and the connection portion 2212 is parallel to the first portion 251 of the connection base 125, so that the connection portion 2212 at the end of the first plate body 221 can be attached to the first portion 251, thereby increasing a contact area between the connection portion 2212 and the first portion 251, reducing a leakage risk between the first plate body 221 and the first portion 251, and improving the connection strength. In addition, the first plate body 221 configured as a curved plate may be manufactured by means such as stamping and welding.

As such, when the first plate body 221 is in a flat plate form, the first plate body 221 does not need to be manufactured by processes such as stamping, thereby reducing production costs. When the first plate body 221 is a curved plate, a connection area between the connection base 125 and the heat exchange plate 122 can be increased, the structural strength can be improved, and a leakage risk can be reduced.

In some embodiments, the connection base 125 is connected to the heat exchange plate 122 by brazing, and the first plate body 221 is connected to the second plate body 222 by brazing.

In this embodiment, the connection base 125 and the heat exchange plate 122 are both made of a metal material. The metal material may include metals such as copper, iron and steel, and alloys. The first portion 251 of the connection base 125 is connected to the target side 2211 of the first plate body 221 by brazing, and the first portion 251 of the connection base 125 is connected to the plate edge 2221 of the second plate body 222 by brazing. The brazing results in small thermal deformation and good sealing performance, and is also suitable for welding between complex structures. In some other embodiments, the first portion 251 of the connection base 125 may further be connected to the heat exchange plate 122 by means such as friction stir welding and arc welding. In some other embodiments, the second portion 252 of the connection base 125 and the plate edge 2221 of the second plate body 222 may be connected together by brazing, so as to improve the fixing strength between the connection base 125 and the heat exchange plate 122.

In some embodiments, the number of the connection through holes on the second portion 252 is two, and the number of the pipe joints 124 is two. The two pipe joints are a liquid inlet pipe joint and a liquid outlet pipe joint, respectively, and the liquid inlet pipe joint and the liquid outlet pipe joint are connected to the two connection through holes, respectively.

The liquid inlet pipe joint is configured to inject a heat exchange medium into the flow channel 223 of the heat exchange plate 122. The liquid outlet pipe joint is configured to output the heat exchange medium from the flow channel 223. In this embodiment, the number of the connection through holes is two, and the heat exchange plate 122 is connected to one liquid inlet pipe joint and one liquid outlet pipe joint. In some other embodiments, the number of connection through holes may be a plurality, so that the heat exchange plate 122 can be connected to a plurality of liquid inlet pipe joints or liquid outlet pipe joints.

As such, the heat exchange medium can enter the flow channel 223 of the heat exchange plate 122 through the liquid inlet pipe joint, and exit the flow channel 223 of the heat exchange plate 122 through the liquid outlet pipe joint.

In some embodiments, the frame 121 is connected to the heat exchange plate 122 by friction stir welding.

In this embodiment, the frame 121 is connected to the first plate body 221 of the heat exchange plate 122 by friction stir welding. In some other embodiments, the welding manner may be arc welding, brazing, or the like. In addition, the connection manner between the frame 121 and the heat exchange plate 122 may be bolting, screwing, or the like.

As such, compared with the brazing, the friction stir welding provides higher connection strength. This can improve the strength of the battery device 100.

The present application further provides an electric device. The electric device includes a battery device 100. It should be noted that the battery device 100 in this embodiment is the battery device 100 described in the above embodiments, and details are not described herein again.

As such, in the battery device 100, the heat exchange plate has a portion located outside the accommodating cavity, and the opening on the heat exchange plate is located outside the accommodating cavity, so that both the connection base and the opening are located outside the accommodating cavity. On the one hand, it can be convenient to detect whether leakage occurs, and on the other hand, if leakage occurs at the connection therebetween, it can be convenient to repair the leakage.

Finally, in a specific application scenario, the present application aims to solve the problem that leakage of the heat exchange plate 122 in the existing battery device 100 cannot be repaired. The battery device 100 of the present application includes a case 120. The case 120 includes a frame 121, a heat exchange plate 122, a connection base 125, and a pipe joint 124. The frame 121 defines, in an enclosing manner, an accommodating cavity 123. The heat exchange plate 122 is arranged on a side of the accommodating cavity 123. The heat exchange plate 122 is provided with a flow channel 223. The heat exchange plate 122 extends to the outside of the accommodating cavity 123 and is provided with an opening 224 outside the accommodating cavity 123. The opening 224 is in communication with the flow channel 223. The connection base 125 covers the opening 224 on the heat exchange plate 122 and is connected to the heat exchange plate 122. The connection base 125 is provided with a connection through hole (not shown), and the connection through hole is in communication with the opening 224. The pipe joint 124 is connected to the opening 224 on the heat exchange plate 122 through the connection through hole. The connection base 125 includes a first portion 251 and a second portion 252. The first portion 251 is connected to the second portion 252, the first portion 251 is connected to the heat exchange plate 122, the second portion 252 is provided with a connection through hole, and the first portion 251 and the second portion 252 are of an integrally formed structure. The second portion 252 is a flange. The heat exchange plate 122 includes a first plate body 221 and a second plate body 222. The second plate body 222 is provided with a groove. The second plate body 222 includes a plate edge 2221 located outside the groove. The first plate body 221 is connected to the plate edge 2221 of the second plate body 222, and the first plate body 221 covers a part of an opening of the groove. The first plate body 221 includes a target side 2211 located at the groove. The frame 121 is located on the target side 2211 of the first plate body 221. The target side 2211 and the plate edge 2221 define, in an enclosing manner, to form the opening 224. The second portion 252 is connected to the target side 2211 of the first plate body 221, and the second portion 252 is further connected to the plate edge 2221 of the second plate body 222. The first portion 251 is a fixing plate. The fixing plate is arranged to be attached to the frame wall of the frame 121, and the fixing plate and the flange are arranged at an included angle. The connection base 125 is connected to the heat exchange plate 122 by brazing, and the first plate body 221 is connected to the second plate body 222 by brazing. The number of the connection through holes on the second portion 252 is two. The pipe joint 124 includes a liquid inlet pipe joint and a liquid outlet pipe joint. The liquid inlet pipe joint and the liquid outlet pipe joint are connected to the two connection through holes, respectively. The frame 121 is connected to the heat exchange plate 122 by friction stir welding.

With the above arrangement, the heat exchange plate has a portion located outside the accommodating cavity, and the opening on the heat exchange plate is located outside the accommodating cavity, so that both the connection base and the opening are located outside the accommodating cavity. On the one hand, it can be convenient to detect whether leakage occurs, and on the other hand, if leakage occurs at the connection therebetween, it can be convenient to repair the leakage.

In conclusion, it should be noted that the above embodiments are for description of the technical solutions of the present application only, rather than for limiting the present application. Although the present application has been described in detail with reference to the foregoing embodiments, persons of ordinary skill in the art should understand that they can still make modifications to the technical solutions described in the embodiments or make equivalent replacements to some or all technical features thereof without departing from the scope of the technical solutions of the embodiments of the present application. All such modifications and equivalent replacements shall fall within the scope of claims and specification of the present application. Especially, provided that there is no structural conflict, the various technical features mentioned in the embodiments can be combined in any way. The present application is not limited to the specific embodiments disclosed herein, but includes all technical solutions falling within the scope of the claims.

## Claims

1. A battery device, wherein the battery device comprises a case, and the case comprises:
a frame, wherein the frame defines, in an enclosing manner, to form an accommodating cavity, and
a heat exchange plate, wherein the heat exchange plate is arranged on a side of the accommodating cavity, the heat exchange plate is provided with a flow channel, the heat exchange plate extends to the outside the accommodating cavity and is provided with an opening outside the accommodating cavity, and the opening is in communication with the flow channel;
a connection base, wherein the connection base covers the opening on the heat exchange plate and is connected to the heat exchange plate, the connection base is provided with a connection through hole, and the connection through hole is in communication with the opening; and
a pipe joint, wherein the pipe joint is connected to the connection base and is in communication with the opening on the heat exchange plate through the connection through hole.

2. The battery device according to claim 1, wherein
the connection base comprises a first portion and a second portion, wherein the first portion is connected to the second portion, the first portion is connected to the heat exchange plate, the second portion is provided with the connection through hole, and the first portion and the second portion are of an integrally formed structure.

3. The battery device according to claim 2, wherein
the second portion is a flange.

4. The battery device according to claim 3, wherein
the pipe joint is connected to the flange by brazing.

5. The battery device according to claim 2, wherein
the heat exchange plate comprises a first plate body and a second plate body, the second plate body is provided with a groove, the groove forms a part of the flow channel, the second plate body comprises a plate edge located outside the groove, the first plate body is connected to the plate edge of the second plate body, the first plate body covers a part of an opening of the groove, the first plate body comprises a target side located at the groove, the frame is located on the target side of the first plate body, the target side and the plate edge define, in an enclosing manner, to form the opening, the second portion is connected to the target side of the first plate body, and the second portion is further connected to the plate edge of the second plate body.

6. The battery device according to claim 5, wherein
the second plate body is manufactured by means of stamping.

7. The battery device according to claim 3, wherein
the first portion is a fixing plate, the fixing plate is attached to the frame, and the fixing plate and the flange are arranged at an included angle.

8. The battery device according to claim 7, wherein
a gap is formed between the fixing plate and the frame, and the gap is configured to enable a heat exchange medium to flow out when leakage occurs in the heat exchange medium.

9. The battery device according to claim 8, wherein
the fixing plate is provided with a groove track, so that the gap is formed after the fixing plate is attached to the frame.

10. The battery device according to claim 2, wherein
The first portion is perpendicular to the second portion.

11. The battery device according to claim 5, wherein
the first plate body is a flat plate.

12. The battery device according to claim 11, wherein
the first plate body is manufactured by means of cutting.

13. The battery device according to claim 5, wherein
a connection portion is formed by bending the target side of the first plate body, and the connection portion is connected to the first portion of the connection base.

14. The battery device according to claim 13, wherein
a stepped groove is formed on a side of the first portion, and the target side of the first plate body is connected to the stepped groove.

15. The battery device according to claim 5, wherein
the connection base and the heat exchange plate are both made of a metal material.

16. The battery device according to claim 5, wherein
the connection base is connected to the heat exchange plate by brazing, and the first plate body is connected to the second plate body by brazing.

17. The battery device according to claim 3, wherein
the first portion and the second portion are both rectangular.

18. The battery device according to any one of claims 2 to 17, wherein
a number of the connection through holes on the second portion is two, a number of the pipe joints is two, the two pipe joints are a liquid inlet pipe joint and a liquid outlet pipe joint, respectively, and the liquid inlet pipe joint and the liquid outlet pipe joint are connected to two connection through holes, respectively.

19. The battery device according to any one of claims 1 to 18, wherein
the frame is connected to the heat exchange plate by friction stir welding.

20. An electric device, comprising the battery device according to any one of claims 1 to 19, wherein the battery device is configured to provide electric energy.
